# EUROPEAN PATENT SPECIFICATION

(11) **EP 0 563 874 B1**
(45) Date of publication and mention of the grant of the patent: **24.02.1999**
(21) Application number: 93105215.3
(22) Date of filing: 30.03.1993
(51) Int. Cl.: G03B 21/62, G02B 3/00, G02F 1/1335

(54) **Optical illumination system and projection display apparatus using the same**
Optisches Beleuchtungssystem und eine dieses verwendende Projektionsanzeigevorrichtung
Système d'éclairage optique et dispositif d'affichage par projection l'utilisant

(30) Priority: 31.03.1992 JP 76694/92; 20.11.1992 JP 311736/92
(43) Date of publication of application: 06.10.1993
(73) Proprietor: MATSUSHITA ELECTRIC INDUSTRIAL CO., LTD., Kadoma-shi, Osaka-fu, 571 (JP)
(72) Inventor: Masumoto, Yoshihiro, Kobe-shi, Hyogo-ken (JP)
(74) Representative: Eisenführ, Speiser & Partner

(56) References cited:
- EP-A- 180 800
- EP-A- 395 156
- US-A- 4 547 037
- US-A- 4 769 750
- US-A- 4 988 188
- PATENT ABSTRACTS OF JAPAN vol. 5, no. 127 (M-83)15 August 1981 & JP-A-56 064 837 ( MATSUSHITA ELECTRIC ) 2 June 1981

## Description

### BACKGROUND OF THE INVENTION

### Field of the Invention

The present invention relates to an optical illumination system to be used mainly to illuminate a light bulb. The present invention also relates to a projection display apparatus for illuminating the light bulb by the optical illumination system so as to enlargingly project an optical image, which has been formed on the light bulb, onto a screen.

### Description of the Prior Art

A projection display apparatus using a light bulb is known as a method for displaying an image on a large screen. A projection display apparatus using a liquid crystal panel has been developed in recent years. An example of the construction of the projection display apparatus is described in SID' 91 Digest, page 415 through page 418.

It is necessary to provide such a projection display apparatus with an optical illumination system which illuminates an optical image formed on a light bulb with strong light. The quality of the optical image projected on the screen depends greatly on the illuminating performance of the optical illumination system. Accordingly, there is a growing demand for the development of the optical illumination system providing the luminous flux which has good color reproducing property, good uniformity of brightness, and good uniformity of color, with high efficiency.

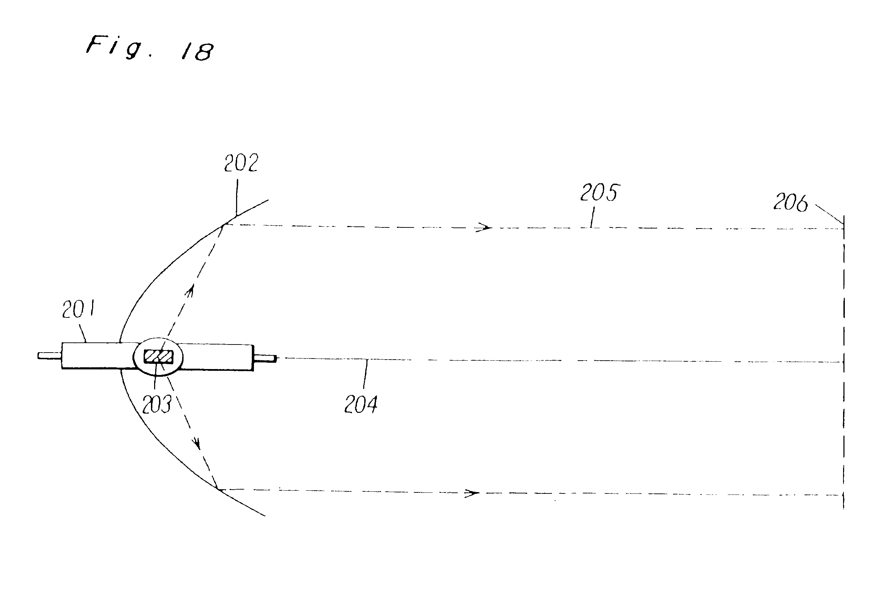

An optical illumination system using a concave mirror has been conventionally used. Fig. 18 shows an example of the construction of this type of optical illumination system comprising a lamp 201 and a concave mirror 202. The concave mirror 202 consisting of a parabolic mirror condenses most of beams of light radiated by a radiation source 203 and forms illuminating beams 205 substantially parallel with an optical axis 204, thus illuminating an object region 206.

A metal halide lamp, a xenon lamp or a halogen lamp is used as the lamp 201. The metal halide lamp is superior to the xenon lamp and the halogen lamp in luminous efficacy and color reproduction properties. The concave mirror 202 may be composed of an ellipsoidal mirror.

In the optical illumination system using the concave mirror, the concave mirror condenses illuminating beams with a high efficiency, but since the luminous density in the vicinity of the optical axis 204 is high, the brightness of the object region 206 is nonuniform. A method for frosting the tube surface of the lamp 201 is used to improve the uniformity of brightness and color which are obtained on the object region 206. But the frosted tube diffuses beams and as a result, the object region 206 has a very low brightness.

As a method for improving the uniformity of brightness and color of illuminating light, an optical integrator which uses lens arrays is known as disclosed in examined Japanese Patent Publication No. 43-5089 and U.S. Patent 5,098,184. Fig. 19 shows an example of the construction of the optical illumination systems comprising the optical integrator.

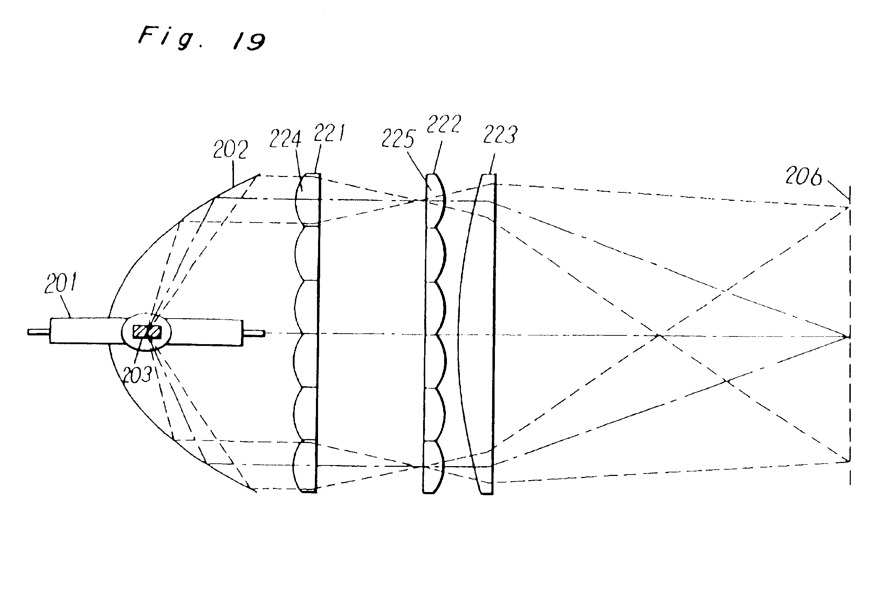

An optical illumination system as shown in Fig. 19 includes a first lens array plate 221, a second lens array plate 222, and a third lens 223 in addition to the components of the optical illumination system using the concave mirror as shown in Fig. 18. The first lens array plate 221 and the second lens array plate 222 are composed of a plurality of first lenses 224 and a plurality of second lenses 225 arranged two-dimensionally, respectively. The first lens array plate 221 divides a single luminous flux, having a great brightness nonuniformity, which are reflected by the concave mirror 202 into the same number of partial luminous fluxes as the number of the first lenses 224. The degree of the nonuniform brightness of each partial luminous flux is smaller than the degree of the nonuniform brightness of the single luminous flux. The partial luminous fluxes are effectively transmitted to the object region 206 by the second lens array plate 222 and superimposed on each other by the third lens 223. In this manner, illumination having a high degree of brightness uniformity can be obtained.

The conventional optical illumination system as shown in Fig. 19 has, however, a low efficiency of light in action when the illuminating angle of illuminating light is limited to a certain range although the optical illumination system has a high degree of brightness uniformity. The illuminating angle means the angle of a beam which forms the maximum angle with the main optical axis of the optical illumination system in illuminating the object region. This disadvantage is conspicuous if the optical illumination system has a large radiation source. The reason is as follows:

Most of beams emitted by the lamp 201 are reflected by the concave mirror 202 and incident on the first lens array plate 221, thus reaching the second lens array plate 222. Accordingly, if there is no loss of light at the second lens array plate 222, most of beams radiated by the lamp 201 reach the object region 206. That is, the efficiency of light in action of the entire illuminating optical system depends mainly on the loss amount of light at the second lens array plate 222.

The plural real images of the radiation source 203 are formed on the second lens array plate 222 through the concave mirror 202 and the first lens 224. If a real image larger than the area of the aperture of the second lens 225 is formed thereon, some beams are not effectively transmitted to the object region 206 and an optical loss occurs. That is, the efficiency of light in action of the optical illumination system deteriorates.

The size of the real image formed on the second lens array plate 222 is determined by the size of the radiation source 203. Therefore, preferably, a lamp comprising a small radiation source is used in view of the efficiency of light in action of the optical illumination system. However, in the case of the metal halide lamp of short arc type, the wattage of which is 150 W to 250W, the length of the radiation source is as short as 5mm to 10mm. As a result, the emission characteristic of the lamp is extremely deteriorated or the life time thereof is shortened. The same is the case with the halogen lamp.

Possibly, only the second lens array plate is enlarged without changing the construction of the optical system so as to reduce optical loss. In this case, the illuminating angle of illuminating light on the object region is large, and the optical illumination system for use in a projection display apparatus has the following problems:

With the increase of the illuminating angle of illuminating light, the converging angle of light emitted by the light bulb becomes large. As a result, it is necessary to use a projection lens having a small f-number. The projection lens has, however, a large effective diameter and expensive. It is therefore difficult to construct a compact projection optical apparatus.

The light bulb which utilizes polarization changes its optical characteristic according to the incident angle of light. For example, a liquid crystal panel deteriorates the contrast of an image displayed on a screen with the increase of the illuminating angle of illuminating light. Therefore, there is a limitation in the f-number of a projection lens which can be practically used.

### SUMMARY OF THE INVENTION

It is an object of the present invention to provide an optical illumination system which provides a high degree of brightness uniformity and illuminating light forming a small angle with the optical axis thereof with a high efficiency of light in action.

It is another object of the present invention to provide a compact projection display apparatus, using an optical illumination system, which displays an image bright and having a high degree of brightness uniformity on a screen.

In accomplishing these and other objects of the present invention, there is provided an optical illumination system as defined in claim 1. The illumination system comprises: a radiation source; a condensing means for converting beams of light radiated by the radiation source into a single luminous flux; a first lens array comprising a plurality of first lenses arranged two-dimensionally; and a second lens array comprising a plurality of second lenses, forming a pair with each of the first lenses, arranged twodimensionally, in which the first lens array divides the single luminous flux which have gone out from the condensing means into a plurality of partial luminous fluxes in the same number to that of the first lenses, and each of the first lenses converges each of the partial luminous fluxes so as to guide each of the partial luminous fluxes passing through each of the first lenses onto each of apertures of the corresponding second lenses and to make each of cross-sections of the partial luminous fluxes cut off by each of the apertures of the second lenses be a minimum area; each of the second lenses magnifies each of the partial luminous fluxes so as to illuminate whole area of object finite regions to be illuminated with each of the partial luminous fluxes passing through each of the second lenses and superimposes each of the partial luminous fluxes under guiding onto the object finite regions to be illuminated; each of the second lenses has a larger aperture than each of the cross-sections of the partial luminous fluxes cut off by each of the apertures of the second lenses, at least one portion of the plurality of the second lenses having a different configuration of aperture to each other, and is arranged convergently so as to inscribe the effective regions of the second lens array formed by the sum of each of the apertures of the second lenses onto a circle range.

According to the above construction, the single luminous flux which has gone out from the condensing means and has been incident on the first lens array is divided into a plurality of partial luminous fluxes, the number of which is equal to the number of the first lenses. The degree of the brightness uniformity of each of the partial luminous fluxes is higher than that of the single luminous flux.

The partial luminous fluxes which have gone out from each of the first lenses is incident on the corresponding to the second lens of the second lens array. The second lens array transmits the partial luminous fluxes to the object region to be illuminated, thus superimposing them on each other. In this manner, the optical illumination system provides a illuminating light having a high degree of brightness uniformity. The apertures of a part of the second lenses are effectively differentiated from each other. Supposing that the distance between the aperture center of each of the first lens and the condensing means is the height of each first lens, the effective aperture areas of a part of the second lenses corresponding to the first lenses, the height of which are great are set to be relatively small. In addition, the second lenses are arranged in close contact with each other so that the configuration of the second lens array is approximate to the smallest possible circle. In this manner, each of the second lenses provides an aperture with a sufficient area for the sectional area of the corresponding partial luminous flux while the sum of the aperture areas of the second lenses can be reduced. The optical illumination system according to the present invention utilizes beams radiated by the light source with a high efficiency, thus providing illuminating light which is uniformly bright in a high extent and forms a small angle with the main optical axis. The projection display apparatus is compact and provides an image bright and uniformly bright in a high extent by using the optical illumination system.

### BRIEF DESCRIPTION OF THE DRAWINGS

These and other objects and features of the present invention will become clear from the following description taken in conjunction with the preferred embodiments thereof with reference to the accompanying drawings, in which:
Fig. 1 is a view showing the construction of an optical illumination system according to an embodiment of the present invention;
Fig. 2 is a view showing the construction of a first lens array plate according to an embodiment of the present invention;
Fig. 3 is a view showing the construction of a second lens array plate according to an embodiment of the present invention;
Fig. 4 is a view describing the operation of the optical illumination system according to the present invention;
Fig. 5 is a view showing the construction of a first lens of the first lens array plate shown in Fig. 2;
Fig. 6 is a view showing the construction of a second lens of the second lens array plate shown in Fig. 3 and the image of a radiation source formed on the second lens;
Fig. 7 is an illustration showing the image of the radiation source formed on the second lens shown in Fig. 3;
Fig. 8 is a diagram showing the correlation between the height (H) of the first lens and the magnifications KL as well as KW of the image of the radiation source according to an embodiment of the optical illumination system of the present invention;
Fig. 9 is a view showing the construction of the optical illumination system according to another embodiment of the present invention;
Fig. 10 is a view showing the construction of the optical illumination system according to another embodiment of the present invention;
Figs. 11, a to c, are views showing the construction of a lens array plate according to another embodiment of the present invention; Fig. 11a is a plan view showing a first lens array plate 83; Fig. 11b is a sectional view thereof taken along a line A-A' of Fig. 11a; and Fig. 11c is a sectional view thereof taken along a line B-B' of Fig. 11a.
Fig. 12 is a view showing the construction of the second lens array plate according to another embodiment of the present invention;
Fig. 13 is a view showing the construction of a projection display apparatus according to an embodiment of the present invention;
Fig. 14 is a view showing the construction of a conventional second lens array plate and the image of a radiation source formed by using second lens array plate;
Fig. 15 is a view showing the construction of the projection display apparatus according to another embodiment of the present invention;
Fig. 16 is a view showing the construction of the projection display apparatus according to another embodiment of the present invention;
Fig. 17 is a view showing the construction of the projection display apparatus according to another embodiment of the present invention;
Fig. 18 is a view showing the construction of an example of a conventional optical illumination system; and
Fig. 19 is a view showing the construction of another example of a conventional optical illumination system.

### DESCRIPTION OF THE PREFERRED EMBODIMENTS

Before the description of the present invention proceeds, it is to be noted that like parts are designated by like reference numerals throughout the accompanying drawings.

An optical illumination system according to a first embodiment of the present invention is described below with reference to the drawings.

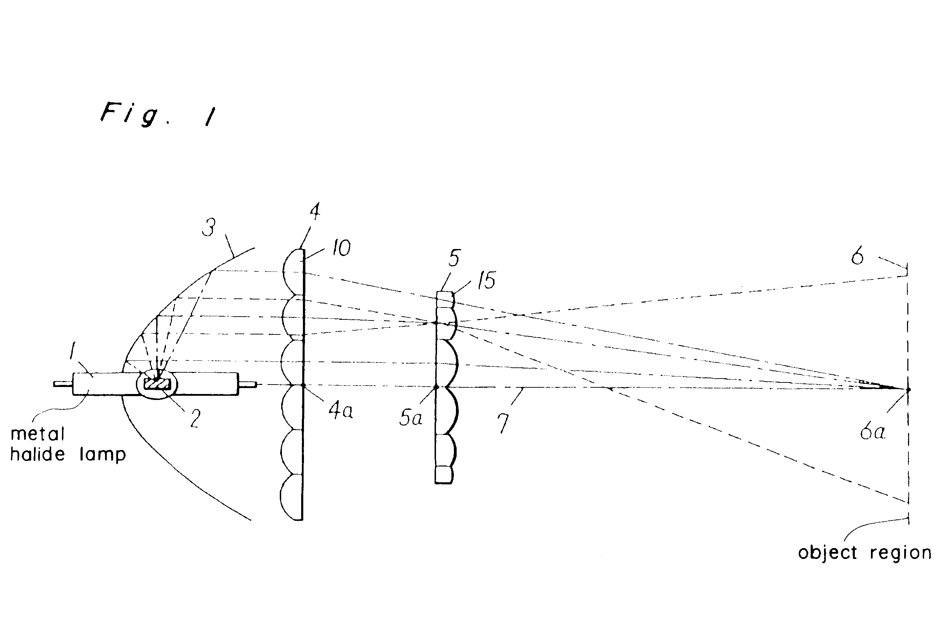

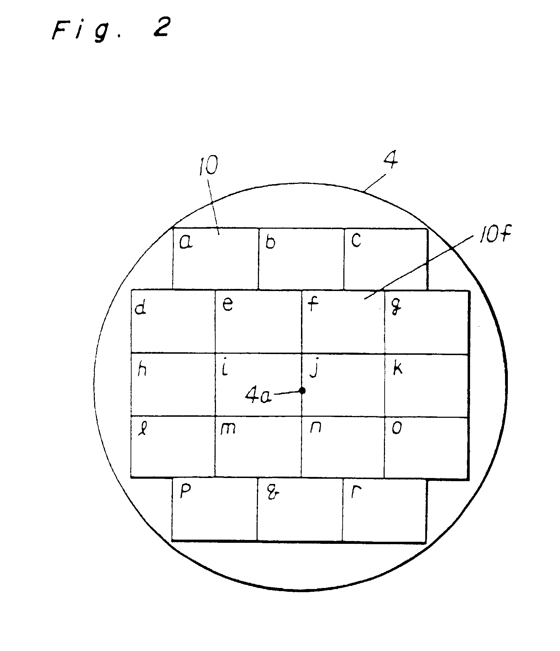

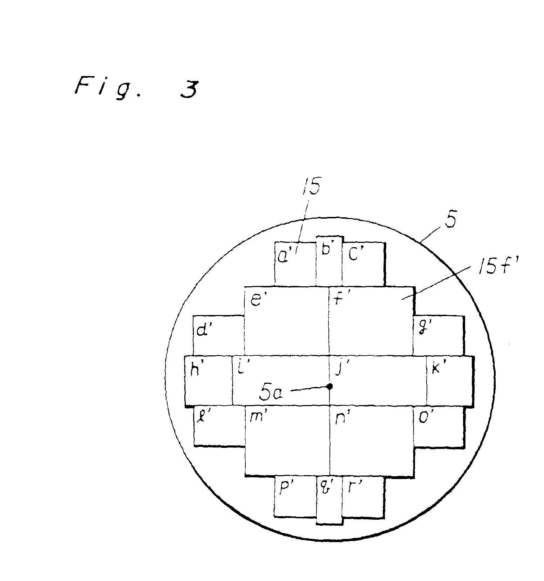

Fig. 1 is a view showing the construction of an optical illumination system according to the first embodiment of the present invention. The optical illumination system comprises a metal halide lamp 1; a radiation source 2; a parabolic mirror 3; a first lens array plate 4; a second lens array plate 5; and an object region 6 to be illuminated. The main optical axis 7 of the optical illumination system is coincident with the rotation symmetry axis of the parabolic mirror 3. The main optical axis 7 is passing through the center of effective region of the first lens array plate 4 and the center of effective region of the second lens array plate 5 and reaches to the center 6a of the object region 6 to be illuminated. The object region 6 is set as the effective display area of a light bulb such as a liquid crystal panel.

The metal halide lamp 1 consists of the radiation source 2. The radiation source 2 has approximately a cylindrical shape. The direction of the major axis of the radiation source 2 and that of the main optical axis 7 coincide with each other and the center of gravity of the radiation source 2 is disposed in the vicinity of the focal point of the parabolic mirror 3. Accordingly, beams substantially parallel with the main optical axis 7 are incident on the first lens array plate 4. More specifically, beams radiated from the focal point of the parabolic mirror 3 and made to be parallel with the main optical axis 7 are incident on the first lens array plate 4.

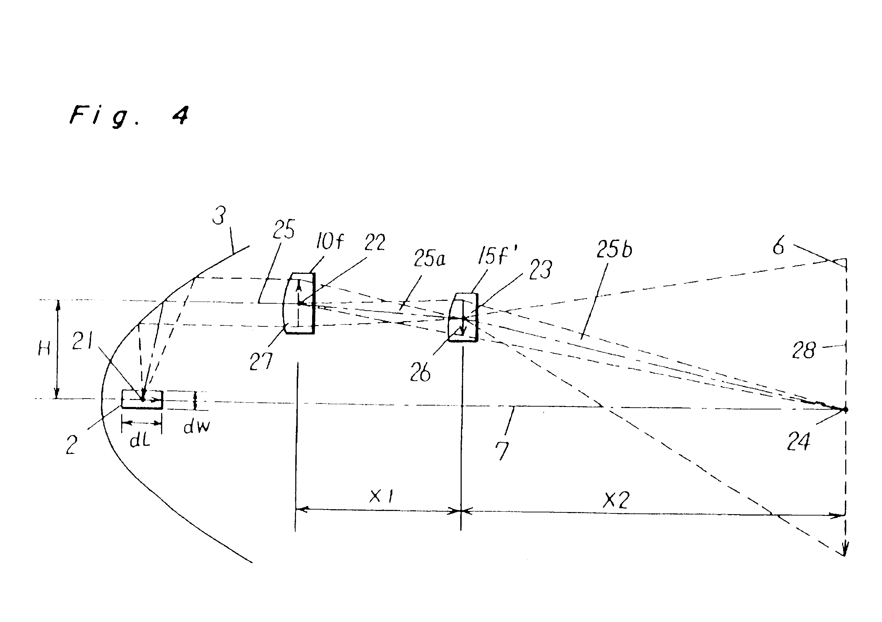

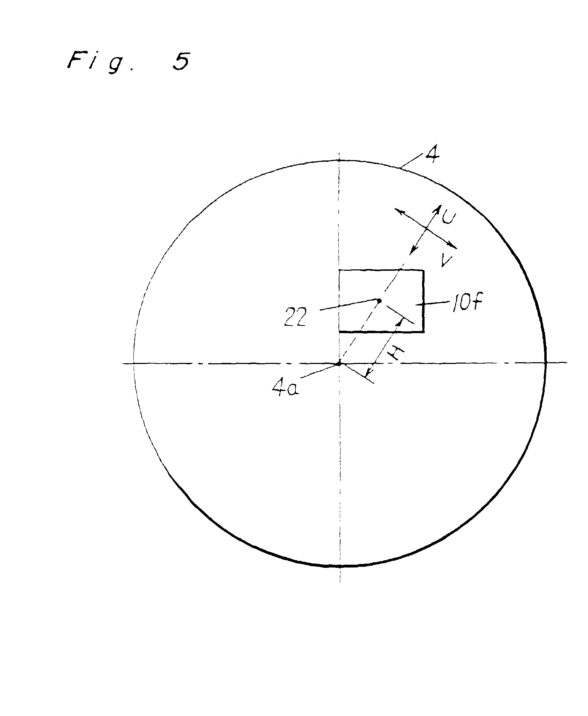

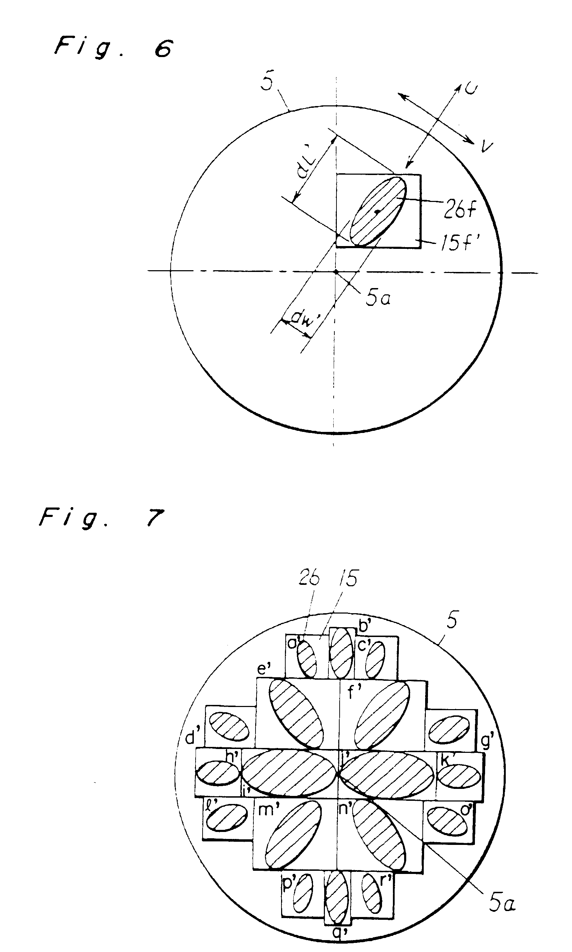

Fig. 2 shows an example of the construction of the first lens array plate 4 composed of 18 first lenses 10 having an aperture, respectively shaped similarly to the rectangular object region 6. The reference symbols (a) through (r) correspond to each of the second lenses (a') through (r') composing the second lens array plate 5 which is described later. The first lenses 10 are all plano-convex lenses and the convex surfaces thereof are opposed to the parabolic mirror 3.

The apertures of the first lenses 10 are all rectangular and the aspect ratio thereof is set to 4:3 supposing that the optical illumination system illuminates a liquid crystal panel on which a TV image of NTSC system is displayed. In conformity with the sectional configuration of a luminous flux reflected by the parabolic mirror 3, the first lenses 10 are arranged so that the entire aperture configuration of the first lens 10 formed by bringing the respective lenses into close contact with each other is approximate to a circle. The center 4a of the effective region of the first lens array plate 4 is the center of a circumscribed circle about 18 lenses of the first lens 10. The main optical axis 7 passes through the center 4a. The first lens 10 consists of (N) pieces of lenses, and the similarity ratio of the object region 6 to the aperture area of the entire first lens 10 is defined as the magnification (M) of a second lens 15. The definition applies to all embodiments which will be described below.

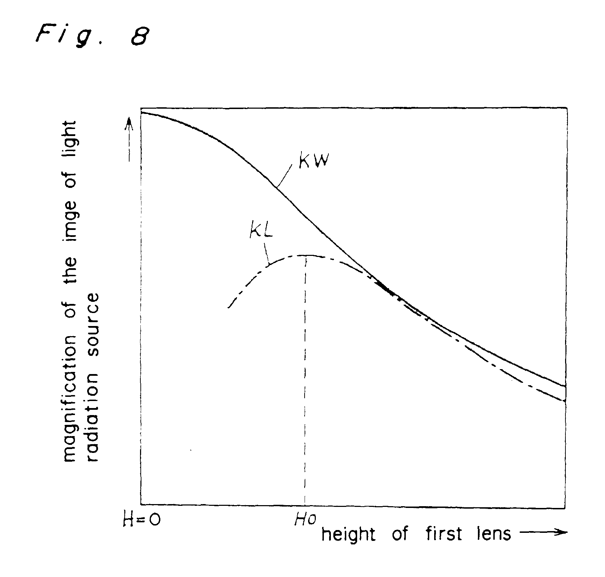

Fig. 3 is a view showing an example of the construction of the second lens array plate 5. The second lens array plate 5 comprises 18 second lenses 15 arranged in close contact with each other in correspondence with each of the first lenses 10. The reference symbols (a') through (r') correspond to each of the symbols (a) through (r) of the first lens 10. The second lenses 15 are all plano-convex lenses and the convex surfaces thereof are opposed to the object region 6.

The illumination procedure and feature of the optical illumination system, having the above construction, according to the first embodiment of the present invention is described below. The parabolic mirror 3 condenses beams of light radiated by the radiation source 2, thus forming a single luminous flux which travels along the main optical axis 7. A portion of the single luminous flux in the vicinity of the main optical axis 7 has a higher luminous density and a greater degree of brightness nonuniformity than a portion thereof distant therefrom. The single luminous flux which has been incident on the first lens array plate 4 is divided into 18 partial luminous fluxes by each of the 18 first lenses 10. The degree of the brightness nonuniformity of each of the partial luminous fluxes is smaller than that of the single luminous flux. Each of the first lenses 10 guides a partial luminous flux which has been incident thereon to the aperture of a corresponding second lens 15 and converges the partial luminous flux to the greatest extent, i.e., to have the smallest spread in the vicinity of the aperture of each of the second lenses 15.

Each of the second lenses 15 enlarges the corresponding partial luminous flux which has been incident thereon into an appropriate size, respectively and the enlarged partial luminous fluxes are superimposed on each other on the object region 6. More specifically, the partial luminous fluxes each having a configuration corresponding to that of the aperture of each first lens 10 are enlarged by the magnification (M) of the second lens 15 and guided to the object region 6 so that the partial luminous fluxes are superimposed on each other thereon. Since the aperture configuration of the first lens 10 is similar to that of the object region 6, the sectional configuration of illuminating light which illuminates the object region 6 coincides with that of the object region 6 and thus the optical illumination system has a high efficiency of light in action.

According to the optical illumination system of the present invention, the single luminous flux having a great degree of brightness nonuniformity is divided into partial luminous fluxes having a low degree of brightness nonuniformity, and the partial luminous fluxes are superimposed on each other on the object region 6. Therefore, the optical illumination system provides illumination uniformly bright in a high extent. Also, it is effective to improve the color unevenness of illumination light.

It is important to compose an optical illumination system having a high efficiency of light in action to obtain bright illuminating light without wastefully consuming electric power. Most of beams radiated by the radiation source 2 are condensed by the parabolic mirror 3, incident on the first lens array plate 4, and then reach the second lens array plate 5. Accordingly, if optical loss is small at the second lens array plate 5, most of beams radiated by the radiation source 2 arrive at the object region 6. In this respect, a very high efficiency of light in action can be achieved by making the sectional area of the aperture of each second lens 15 larger than the sectional area of each partial luminous flux which passes therethrough.

With the increase in the sectional area of the aperture of each second lens 15, the effective region of the second lens array plate 5 becomes greater and as a result, the illuminating angle of the light which illuminates the object region 6 increases. The illuminating angle means the angle of a beam which forms the maximum angle with the main optical axis 7 in illuminating the object region 6. That is, the f-number of the illuminating light becomes small. In the case of projecting an optical image, which is formed on the light bulb, onto the screen on the employment of a projecting lens, it is desired to have a f-number of the projecting lens smaller than that of light for illuminating the light bulb. If not so, it is impossible for the projecting lens to converge a part of light radiated from the light bulb to generate a loss of light, resulting in that it cannot be obtained a bright projecting picture image.

Fig. 3 shows an example of the aperture configuration of each second lens 15 capable of providing a high efficiency of light in action without greatly increasing the illuminating angle of the illuminating light. Fig. 3 also shows an example of the arrangement of the respective second lenses 15.

The each sectional areas of the partial luminous fluxes which become most convergent in the vicinity of the second lens array plate 5 are not the same and different to each other. Generally, the cross-section of partial luminous fluxes becomes more being large the more the partial luminous fluxes are passing through the neighborhood of main optical axis 7, and becomes less being small the less the partial luminous fluxes are apart from the main optical axis 7. Accordingly, each aperture of the respective second lenses 15 has a necessary sectional area for each partial luminous flux by effectively differentiating the aperture sizes from each other. It is possible to allow the sectional area of each aperture to have a greater sectional area than is required, in consideration of a positioning error which occurs in assembling the optical illumination system.

In addition, the respective second lenses 15 are arranged in close contact with each other to approximate the effective region of the second lens array plate 5 to the smallest possible circle.

As a result, there is not a great amount of optical loss in each partial luminous flux passing through each of the apertures of the second lenses 15, because the apertures are effectively differentiated from each other in the sectional area thereof. In addition, since the effective region of the second lens array plate 5 can be reduced, illuminating light forms a small angle with the optical axis without a great optical loss. Accordingly, the optical illumination system of the present invention is capable of forming illuminating light which is uniformly bright in a high degree and forms a small illuminating angle, with a high efficiency of light in action.

The aperture of the second lens 15 is described in detail with reference to Fig. 4 showing necessary components, namely, the radiation source 2, the parabolic mirror 3, the first lens 10f, the second lens 15f' corresponding to the first lens 10f, and the object region 6.

Let it be supposed that the length (direction of major axis) of the radiation source 2 is dL; the width (direction of minor axis) thereof is dW; the focal length of the parabolic mirror 3 is P; the focal length of the first lens 10f is F1; the focal length of the second lens 15f' is F2; the distance between the first lens 10f and the second lens 15f' along the main optical axis 7 is X1; and the distance between the second lens 15f' and the object region 6 along the main optical axis 7 is X2. Within the beams of light radiated from the focal point 21 of the parabolic mirror 3, a light path of light beams passing through the aperture centers 22, 23 of the first lens 10f and second lens 15f' to reach to the center 24 of a region 6 to be illuminated is shown with the reference number 25. With the light path 25, the section between the aperture centers 22, 23 of the first lens 10f and second lens 15f' is deemed as an auxiliary light axis 25a. Also, the section between the aperture center 23 of the second lens 15f and the center 24 of the range 6 to be illuminated is deemed as an auxiliary light axis 25b. The following angles are regarded as very small: The angle formed between the auxiliary optical axis 25a and the main optical axis 7; and the angle formed between the auxiliary optical axis 25b and the main optical axis 7. The length along the auxiliary optical axis 25a and the length along the auxiliary optical axis 25b are regarded to be equal to the length X1 and the length X2, respectively.

The focal length F1 of the first lens 10f is equal to the length X1. Beams which have been radiated from the focal point 21 of the parabolic mirror 3 and have been incident on the first lens 10f in parallel with the main optical axis 7 cross the auxiliary optical axis 25a on the second lens 15f'. That is, the real image 26 of the radiation source 2 is formed on the second lens 15f' by the operation of the parabolic mirror 3 and that of the first lens 10f. The second lens 15f' forms the real image 28 of an object 27 positioned on the first lens 10f on the object region 6. The magnification (M) of the second lens 15f' is determined by the similarity ratio between the sectional area of the aperture of the first lens 10f and that of the object region 6. That is, the magnification (M) is almost equal to the similarity ratio between the distance X1 and the distance X2.

It is necessary that the first lens 10f forms the real image 26 of the radiation source 2 in the vicinity of the aperture center 23 of the second lens 15f' and that the second lens 15f' allows a beam which has passed through the aperture center 22 of the first lens 10f to arrive at the center 24 of the object region 6. In view of this necessity, the first lens 10f and the second lens 15f' are appropriately decentered. More specifically, the first lens 10f is decentered so that the aperture center 23 of the second lens 15f' is disposed on the extension of the rotation symmetry axis of the first lens 10f, and the second lens 15f' is decentered so that the principal point of the second lens 15f' is positioned on a straight line formed by connecting the aperture center 22 of the first lens 10f and the center 24 of the object region 6 with each other.

The above construction allows each partial luminous flux passing through the first lens 10f and second lens 15f' to be utilized with a high efficiency if the real image 26 of the radiation source 2 is smaller than the aperture area of the second lens 15f'. Accordingly, based on the size of the real image of the radiation source 2 formed by the respective first lenses 10, it is possible to shape the configuration and area of each second lens 15 into a configuration which does not generate the optical loss in a large amount.

Fig. 5 shows the first lens 10f of the first lens array plate 4. Let it be defined that the height (H) of the first lens 10f is the height of the aperture center 22 thereof with respect to the main optical axis 7. Fig. 5 shows the definition of the height (H) of the first lens 10f developed two-dimensionally. Directions orthogonal to each other on the first lens array plate 4 are defined as (U) and (V). The direction (U) corresponds to the radial direction of a circle, the center of which is 4a through which the main optical axis 7 passes, and direction (V) corresponds to the circumferential direction of the circle. The direction (U) also corresponds to the height (H) direction of the first lens 10f.

Fig. 6 shows the second lens 15f' of the second lens array plate 5 and an example of the image 26f of the radiation source 2 formed on the second lens 15f'. The directions U and V in Fig. 6 are defined on the first lens array 4, and are not always identical to the radiation direction of the second lens array. The directions U and V in Fig. 6 are ones which are imaginally copied from the directions U and V defined on the first lens array of Fig. 5 onto the second lens array 5 along the proceeding direction of light radiated from the first lens 10f.

The lengthwise direction dL' of the image 26f of the radiation source 2 coincides with the radial direction (U), and the widthness direction dW' of the image 26f coincides with the direction (V) orthogonal to the lengthwise direction dL'. Let it be supposed that the magnification dL'/dL of the image 26f in the lengthwise direction thereof is KL and the magnification dW'/dW thereof in the widthness direction thereof is KW.

Fig. 7 shows an example of all the images 26 of the radiation source 2 formed on the second lens array plate 5. As apparent from Fig. 7, the image 26 produced by the first lens 10 located in the vicinity of the main optical axis 7 is relatively large. On the contrary, the image 26 produced by the first lens 10 located apart from the main optical axis 7 is relatively small.

Fig. 8 shows an example of the relationship between the height (H) of the first lens 10 and the magnification KL of the image 26 in the lengthwise direction thereof as well as the magnification KW thereof in the widthness direction thereof. The magnification KW decreases monotonously with the increase of the height (H). The magnification KL becomes locally maximum at a height H_{O} and decreases monotonously with the increase of the height (H).

When the height (H) of the first lens 10f is very small and the first lens 10f is disposed in the vicinity of the main optical axis 7, the configuration of the image 26 is as follows: That is, the apparent length of the radiation source 2 approaches zero, and as a result, the configuration of the image 26 of the radiation source 2 becomes one close to a circle, which similar to the shape of cross-section of the radiation source 2. Therefore, in a region of H < H_{O}, the size of the image 26 is mainly decided by the value of magnification KW in the widthness direction.

As apparent from the above description, comparing the area of the image 26 formed on the second lens corresponding to the first lens, the height (H) of which is great and the area of the image 26 formed on the second lens corresponding to the first lens, the height (H) of which is small with each other, the former is smaller than the latter. Namely, if the H is large, the image is small, and if the H is small, the image is large. In view of this fact, the aperture areas of second lenses corresponding to the first lenses which are distant from the main optical axis are set to be smaller than the aperture areas of the second lenses corresponding to the first lenses which are near the main optical axis although this construction of the second lens causes a slight optical loss.

More specifically, each of the second lenses 15 provides a sufficient aperture area for the corresponding portion of the image 26 even though the aperture areas of second lenses 15 corresponding to the first lenses 10, the height (H) of which are great are set to be smaller than the aperture areas of the second lenses 15 corresponding to the first lenses 10, the height (H) of which are small. In addition, the area of the effective region of the second lens array plate 5 can be reduced by shaping the apertures of the respective second lenses 15 into rectangular configurations and arranging them in close contact with each other to approximate the entire aperture configuration of the second lens 15 to the smallest possible circle. As a result, the optical illumination system of the present invention provides illuminating light having a high degree of brightness uniformity and forming a small angle with the main optical axis by efficiently utilizing light radiated from the light source.

Each of the second lenses 15 indicated by e', f', m', and n' shown in Fig. 7 has a greater aperture than is required for the corresponding portion of the image 26 so that the second lenses 15 e', f', m', and n' conform to the adjacent second lenses 15. Each of the second lenses 15 e', f', m', and n' is not necessarily shaped into a rectangular configuration but in conformity with the configuration of the image 26, it is possible not to form the region in which the image 26 is not to be formed.

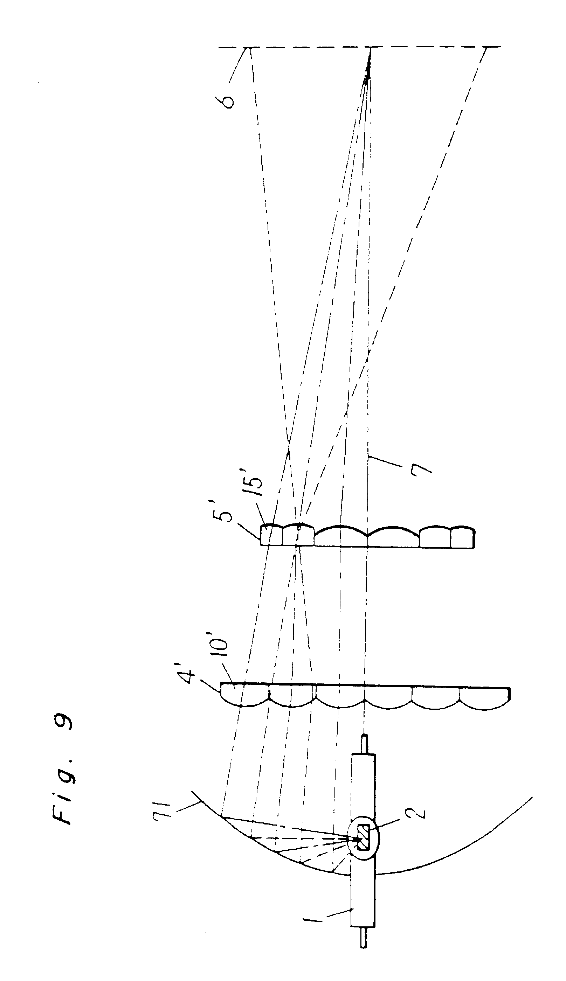

In the optical illumination system according to the first embodiment of the present invention, the concave mirror is not necessarily the parabolic mirror. Fig. 9 shows an embodiment in which an ellipsoidal mirror is used as the concave mirror 71. The curvature, decentering amount, and configuration and area of the aperture of the first lens 10' and those of the second lens 15' are appropriately determined in conformity with the configuration and area of the ellipsoidal mirror 71 so as to compose the first lens array plate 4' and the second lens array plate 5'. In this example, the second lens 15' are arranged in close contact with each other by appropriately differentiating the configurations and areas of the apertures of the respective second lens 15' from each other according to the sectional configuration and area of a partial luminous flux corresponding to each second lens 15'. As a result, an effect similar to that of the first embodiment can be obtained.

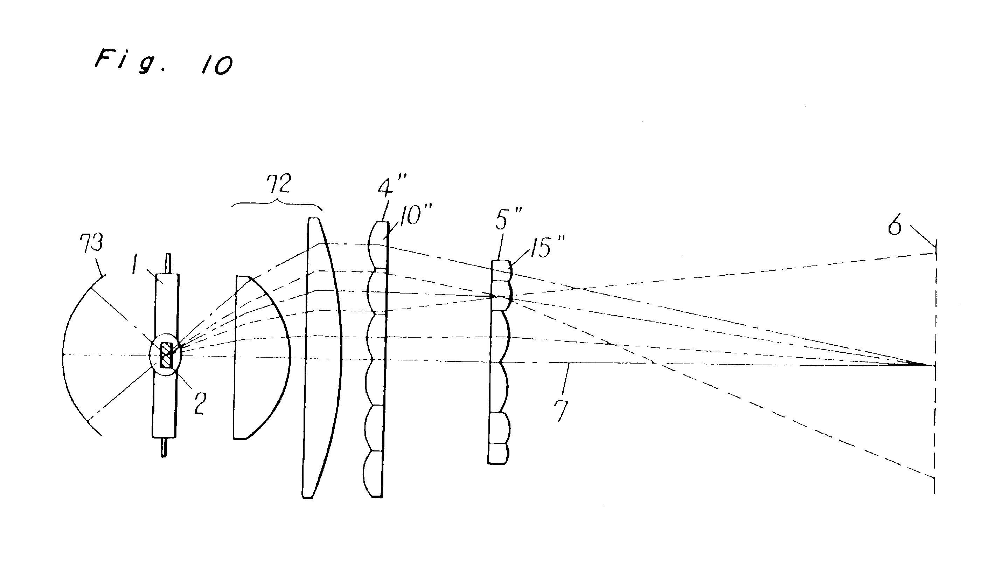

Fig. 10 shows an embodiment in which beams radiated by the radiation source 2 are condensed by a condenser lens 72 and a spherical mirror 73. In principle, if the condenser lens 72 satisfies the sine condition, a luminous flux has a small degree of brightness nonuniformity. If beams radiated by the radiation source 2 are to be condensed with a high efficiency, the f-number of the condenser lens 72 is required to be small and thus it is difficult for the condenser lens 72 to satisfy the sine condition. Similarly to the first embodiment, in this example, the second lenses 15'' are arranged in close contact with each other by appropriately differentiating the aperture configurations and areas of the second lenses 15'' from each other. In this manner, an effect similar to the first embodiment can be obtained.

In the embodiments shown in Figs. 9 and 10, luminous fluxes which are incident on the first lens array plate in the vicinity of the main optical axis are bright while those which are incident thereon distant from the main optical axis are dark. Similarly to the construction as shown in Fig. 1 in which the parabolic mirror is used, this phenomenon also occurs in condensing beams radiated by the radiation source disposed on the optical axis by using the optical system rotation-symmetrical with respect to the optical axis. In this case, the greater the height (H) of the first lens is, the smaller the image of the radiation source formed by the first lens is. Accordingly, the aperture areas of second lenses corresponding to the first lenses, the height (H) of which are great are set to be smaller than the aperture areas of the second lenses corresponding to the first lenses, the height (H) of which are small. In addition, the second lenses are arranged in close contact with each other. This construction is effective for utilizing beams radiated by the light source efficiently and providing illuminating light which forms a small angle with the main optical axis.

In order to allow beams radiated by the radiation source to be incident on the first lens array plate with a high efficiency, it is advantageous to use a concave mirror such as a parabolic mirror or an ellipsoidal mirror having a solid angle large enough to favorably condense beams. In using such a concave mirror, the direction of the major axis of the radiation source is set to be coincident with the direction of the optical axis of the concave mirror. As a result, luminous fluxes are rotation-symmetrical with respect to the optical axis. Therefore, the first and second lens array plates can be advantageously designed.

In the above-described embodiments, the first lens consists of the plano-convex lens with the convex face thereof opposed to the light source, because the plano-convex lens allows the first and second lens array plates to be mass-produced easily at a low cost. The effect that can be obtained with the present invention is not limited to this construction. That is, since the convex face of the first lens 10 is opposed to the parabolic mirror 3 allowing illuminating beams to be parallel with each other, the generation of aberrations can be prevented and each partial luminous flux can be efficiently guided to the aperture of the second lens 15 corresponding to the respective first lenses 10.

The producible construction of the lens array plate composing the optical illumination system contributes to a low cost and mass-producibility. In manufacturing the lens array plate by a conventional press molding, it is preferable that the heights of adjacent lenses are not greatly different from each other in the boundary therebetween. In arranging decentered lenses or lenses having apertures different from each other in the size thereof, it is important that the heights of adjacent lenses are not greatly different from each other in the boundary therebetween. The influence of the difference in the lens heights in the boundary between the adjacent lenses cannot be ignored in arranging decentered lenses or lenses having apertures of different configurations or areas in contact with each other. If the boundary between the adjacent lenses is enlarged to reduce the difference between the heights of adjacent lenses, the optical loss in the boundary increases.

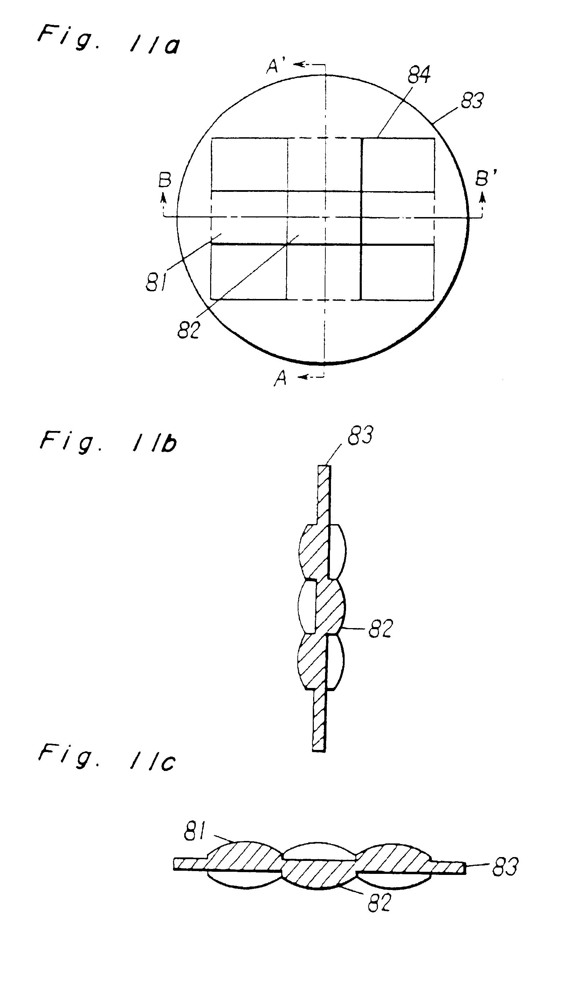

Fig. 11 shows an example of the construction of the first lens array plate formed in consideration of the above-described problem. Fig. 11a is a plan view showing a first lens array plate 83; Fig. 11b is a sectional view thereof taken along a line A-A' of Fig. 11a; and Fig. 11c is a sectional view thereof taken along a line B-B' of Fig. 11a. As shown in Figs. 11b and 11c, in the first lens array plate 83, the convex surfaces of first lenses 81 and 82 adjacent to each other are formed in opposite directions with respect to the substrate of the first lens array plate 83. In this manner, convex surfaces of the first lenses are formed on the substrate thereof in such a manner that the convex surfaces thereof in a forward direction are spaced alternately with the convex surfaces thereof in a backward direction.

The first lens array plate in this construction facilitates the manufacture of the boundary between adjacent lenses. Since the first lens array plate can be formed with the boundary small, optical loss in the boundary can be decreased. The construction of the first lens array plate can be applied to form the second lens array plate because the second lenses of the second lens array plate are arranged by differentiating the aperture configurations and areas thereof from each other.

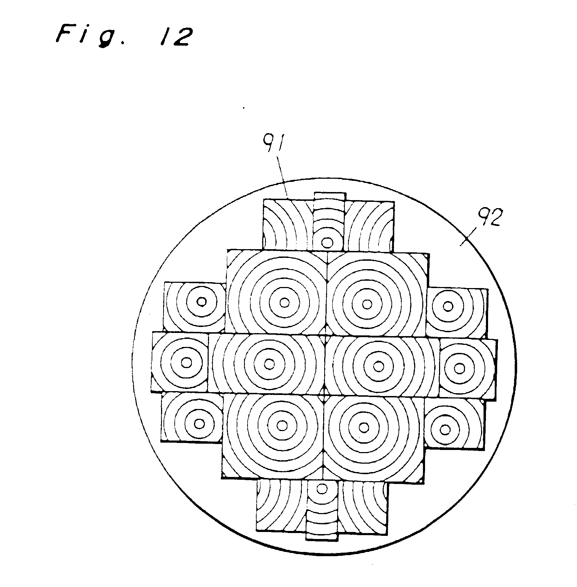

The second lens array plate in the construction as shown in Fig. 12 can be produced with a high efficiency. Fresnel lenses decentered with respect to the aperture thereof are used as second lenses 91 to constitute a second lens array plate 92. As a result, the heights of the boundaries between adjacent lenses can be made to be nearly equal to each other irrespective of the decentering amount and the aperture configuration and area thereof. Accordingly, lens-unprovided area in the boundary between adjacent lenses can be made to be very small, which allows the second lens array plate 92 to be easily formed. In this example, like as the construction of lens array shown in Fig. 11a, 11b and 11c, the second lens array plate can be easily manufactured by spacing leftward (upward) convex surfaces of the second lenses 91 alternately with rightward (downward) convex surfaces thereof onto the both planes of a substrate.

It is known that silicon is superior in heat resistance and has a comparatively high transparency. The optical illumination system of the present invention has the following advantages by composing the first lens array plate and/or the second lens array plate of silicon rubber having a comparatively high transparency.

As described above, it is difficult and expensive to arrange the first lenses or the second lenses different from each other in the decentering amount and the decentering direction thereof in contact with each other. In arranging the first lenses or the second lenses different from each other in the aperture configurations and areas thereof, it is more difficult and more expensive to arrange them in contact with each other. In shaping the first or second lens array plate by press molding, a heat-resistant metal mold is required because glass melted to a high temperature is used. It is difficult and expensive to manufacture a metal mold resistant to a high temperature.

Therefore, preferably, a mold composed of a material resistant to only low temperatures is used to form the lens array plate in view of producibility and cost. Generally, the material of silicon rubber known as two-component type is liquid and effectively used because it is mostly cured at the room temperature. Even though it is necessary to heat them, approximately 100°C suffices for curing it. The cured material is stable, heat-resistant, and weather-resistant. For example, KE 106 and KE 108 manufactured by SHIN-ETSU CHEMICAL CO., LTD. can be used as silicon rubber. KE 106 is cured by addition reaction and KE 108 is cured by condensation reaction.

Owing to the use of the silicon rubber, brass inexpensive and producible can be used as a material of a metal mold. If a mirror surface is required to be formed on the lens surface, preferably, nickel or chrome is plated on brass. Further, method of forming a mold after a lens array plate serving as an original pattern is effectively used. For example, it is possible to prepare an original pattern of the lens array plate by adhering to each other a plurality of plano-convex lenses decentered in various directions and different from each other in the aperture configurations and areas thereof so as to obtain a mold by using appropriate resin by cast molding.

In the above-described methods, liquid silicon rubber is injected into the mold to cure the material. In this manner, the lens array plate can be manufactured with a comparative ease and at a low cost. In this case, preferably, a plurality of molds is prepared to form lens array plates in a mass production in a small scale.

In the above-described embodiment, the aperture configuration of the first lens is similar to the configuration of the object region to be illuminated. This construction is effective for utilizing light emitted by the light source with a high efficiency in allowing the sectional configuration of a luminous flux illuminating the object region to be coincident with that of the object region. But the aperture configuration of the first lens is not limited to the above-described aperture configuration and not necessarily similar to that of the object region.

It is possible to appropriately modify the above-described configuration and construction of the radiation source, the concave mirror, the first lens, the second lens, the first lens array plate, and the second lens array plate and the position relationship among them so long as beams illuminating the object region satisfy the predetermined performance thereof. In particular, the surface of the first lens and/or that of the second lens may be aspherical to decrease the influence of aberrations on illuminating light. In this manner, the beams of light emitted by the light source can be efficiently used.

A halogen lamp or a xenon lamp may be used instead of the metal halide lamp. The metal halide lamp comprises a larger radiation source than the halogen lamp and the xenon lamp while the metal halide lamp is superior in luminous efficacy and color reproducing property. The larger the radiation source is, the greater is the effect of the optical illumination system according to the present invention. Therefore, preferably, the optical illumination system comprises the metal halide lamp.

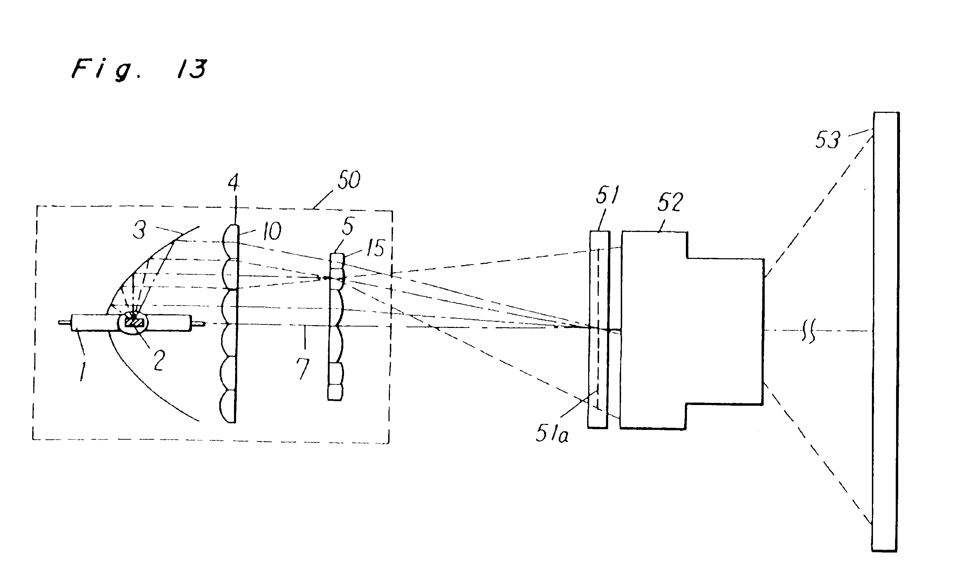

A first embodiment of a projection display apparatus using the optical illumination system of the present invention is described below with reference to Fig. 13. Reference numeral 50 denotes an optical illumination system similar to that of Fig. 1; 51 denotes a twist nematic liquid crystal panel; 52 denotes a telecentric projection lens; and 53 denotes a screen.

The optical illumination system 50 having the operation previously described illuminates the effective display area 51a of the liquid crystal panel 51 by illuminating light uniformly bright. Further, since the effective region of the second lens array plate 5 can be made to be small with a small optical loss generated, illuminating light which illuminates the liquid crystal panel 51 makes a small angle with the main optical axis. Therefore, the projection display apparatus provides uniformly bright image by using the projection lens 52 having a large f-number. Moreover, since illuminating light forms a small angle with the main optical axis, an image can be projected on the screen 53 with a high contrast without being greatly influenced by the characteristic of the incident angle. As a result, the projection display apparatus forms an image of a high quality and has a high efficiency in utilizing light emitted by the light source.

Description is made in detail on the effect of the optical illumination system and the projection display apparatus according to the embodiments described with reference to Figs. 1 and 13, respectively.

Experiments were conducted as follows: A twist nematic liquid crystal panel of active matrix type was used as the liquid crystal panel 51. The length of the diagonal line of the effective display region was 80mm and the aspect ratio was 4 : 3. The first lens array plate 4 of the optical illumination system 50 comprises 18 lenses. The magnification (M) of the second lens 15 was 3.2. The wattage of the metal halide lamp 1 was 250W and the effective length DL of the radiation source 2 was approximately 6mm; the effective widthness DW thereof was approximately 3mm; the focal length of the parabolic mirror 3 was 12mm; and the diameter of the aperture portion of the parabolic mirror 3 was 100mm.

The length of the diagonal line of the rectangular first lens 10 was 25mm and the aspect ratio was 4 : 3. The first lens array plate 4 was composed based on the construction as shown in Fig. 2. The distance X1 between the first lens array plate 4 and the second lens array plate 5 was approximately 90mm, and distance X2 between the second lens array plate 5 and the liquid crystal panel 51 was approximately 280mm; and the focal length F1 of each first lens 10 was 90mm; and the focal length F2 of each second lens 15 was 67mm.

The second lens array plate 5 was composed based on the construction as shown in Fig. 3. The lenses a' through r' of the second lens 15 had aperture lengths as shown in Table 1. The horizontal length described in Table 1 corresponds to the horizontal direction of the display region of the liquid crystal panel 51, and the vertical direction corresponds to the vertical direction thereof.

**Table 1**

| (example of numerical value of aperture length of second lens) | | |
|---|---|---|
| second lenses | horizontal aperture length | vertical aperture length |
| a', c', p', r' | 10mm | 10mm |
| b', q' | 6mm | 12mm |
| d', g', l', o' | 12mm | 10mm |
| e', f', m', n' | 20mm | 17mm |
| h', k' | 11mm | 12mm |
| i', j' | 23mm | 12mm |

According to the above construction, the radius of a circumscribed circle about the aperture of the second lens array plate 5 was 35mm, and a maximum illuminance was 2,500,000 lx at a position immediately forward of the liquid crystal panel 51 when the illuminating angle of illuminating light was approximately 7°. The illuminating angle means the angle of a beam which forms the maximum angle with the main optical axis 7 in illuminating the liquid crystal panel 51.

Measuring the brightness of an image projected on the 40-inch screen 53 by using the projection lens 52 having f-number F4, the maximum illuminance was approximately 1,000 lx. The degree of brightness uniformity of the projected image was very high. The illuminance ratio of the darkest place to the brightest place was approximately 60%, that is,$\frac{\text{darkest place}}{\text{brightest place}} \text{= 60%.}$

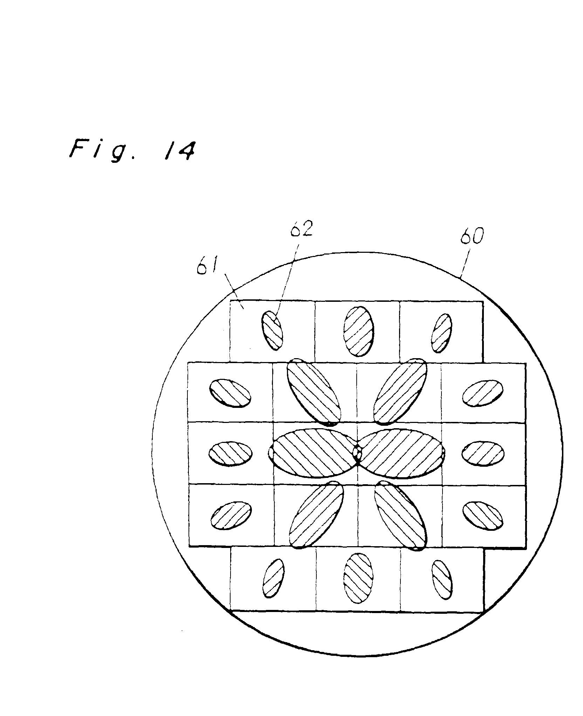

In order to compare the effect of the present invention and that of the conventional art with each other, a second lens array plate 60 was composed for comparison as shown in Fig. 14. The configuration of each of the second lenses 61 was identical to that of the corresponding first lens 10 which was rectangular. More specifically, the length of the diagonal line of the second lens 61 was 25mm and the aspect ratio was 4 : 3. The second lenses 61 were arranged by the same method as that used to arrange the first lens 10. The first lens array plate had the same construction as that shown in Fig. 2. Each of the first lens was not decentered and the focal length thereof was equal to that of the first lens 10 as shown in Fig. 2. The second lenses 61 were decentered appropriately to effectively superimpose partial luminous fluxes on each other. Experiments similar to the above experiment were conducted by using the first and second lens array plates of the above construction, a lamp according to the present invention, a parabolic mirror according to the present invention, and a liquid crystal panel according to the present invention.

The radius of a circumscribed circle about the apertures of the second lenses 61 of the second lens array plate 60 was 45mm and the illuminating angle of illuminating light was approximately 9°. Measuring the illuminance by utilizing illuminating beams passing through the second lenses 61, illuminance was 2,300,000 lx on the liquid crystal panel 51. Observing the image 62 of the radiation source formed on the second lens array plate 60, a part of the image 62 disposed in the vicinity of the main optical axis 7 was greater than the aperture of the second lens 61 through which the luminous flux corresponding to the part of the image 62 passed. That is, an optical loss occurred. Fig. 14 illustrates the observed image 62 of the radiation source formed on the respective second lenses 61.

Measuring the brightness of the 40-inch (1 inch = 25,4 mm) screen 53 by using a projection lens of F3, the maximum illuminance was approximately 900 lx on the screen 53. When a projection lens of F4 was used, the maximum illuminance on the screen 53 was approximately 600 lx.

It was confirmed that the optical illumination system of the present invention utilized beams emitted by the light source and formed illuminating light a high degree of brightness uniformity with the illuminating light forming a small angle with the optical axis. In addition, it was also confirmed that the projection display apparatus provided a uniformly bright image without generating optical loss in spite of the use of a projection lens having a large f-number was used. It was also confirmed that when the liquid crystal panel is used as a light bulb, a display having a higher contrast could be obtained by the use of the projection lens of F4 instead of the projection lens of F3.

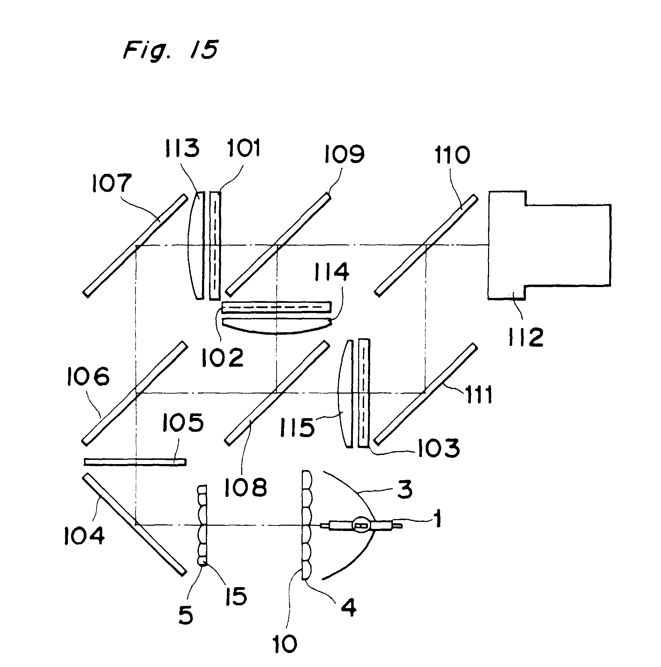

A projection display apparatus according to another embodiment of the present invention is described below with reference to Fig. 15. Liquid crystal panels 101, 102, and 103 corresponding to the three primary colors R, G, and B, respectively are used to constitute the projection display apparatus of full color projection type. The projection display apparatus comprises the metal halide lamp 1; the parabolic mirror 3; the first lens array plate 4; the second lens array plate 5; a cold mirror 104; a UV-IR cut filter 105; color separation dichroic mirrors 106 and 108, field lenses 113, 114, and 115; the liquid crystal panels 101, 102, and 103; color combining dichroic mirrors 109 and 110; return mirrors 107 and 111; and a projection lens 112. The lamp 1, the parabolic mirror 3, the first lens array plate 4, and the second lens array plate 5 are similar to those shown in Fig. 1.

The cold mirror 104 reflects visible light and transmits unnecessary infrared radiation therethrough. The UV-IR cut filter 105 removes unnecessary infrared radiation and ultraviolet rays from illuminating light. The spectral characteristics of the color separation dichroic mirrors 106 and 108 are appropriately designed to separate the illuminating light into the three primary colors R, G, and B. The illuminating light of the three primary colors illuminates the liquid crystal panels 101, 102, and 103 driven by video signals corresponding to the three primary colors R, G, and B. The optical images of the three primary colors R, G, and B formed on the liquid crystal panels 101, 102, and 103, respectively are combined by the color combining dichroic mirrors 109 and 110 and a color image is enlargingly projected on the screen. The field lenses 113, 114, and 115 are used so that the illuminating light is effectively incident on the entrance pupil of the projection lens 112.

The construction of the optical illumination system according to the embodiment as shown in Fig. 15 utilizes beams emitted by the light source and forms an image uniformly bright in a high extent with the illuminating light forming a small angle with the optical axis. Therefore, a projection lens having a large f-number can be used. As a result, the projection display apparatus is compact and forms a high quality image, uniformly bright in a high extent, on the screen.

According to the construction of the projection display apparatus as shown in Fig. 15, the following three optical path lengths are equal to each other: The length of the optical path between the second lens array plate 5 and the liquid crystal panel 101, the liquid crystal panel 102, and the liquid crystal panel 103. This construction allows the illumination of the three liquid crystal panels 101, 102, and 103 corresponding to the three primary colors in the same condition by using one lamp, one concave mirror, one first lens array plate, and one second lens array plate. That is, this construction enables an image display bright and uniformly bright in a high extent. In addition, according to this construction, parts such as the lens array plate can be decreasingly used.

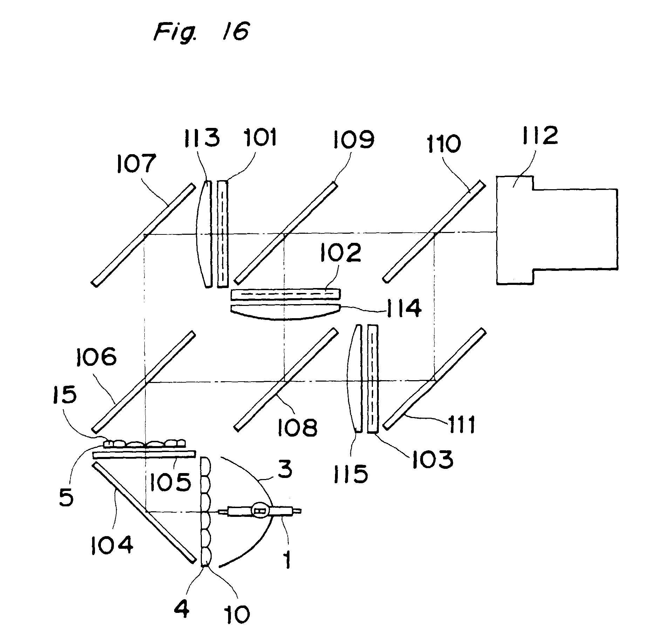

The projection display apparatus as shown in Fig. 15 may be modified to the construction as shown in Fig. 16 by providing an interval on the optical path between the first lens array plate 4 and the second lens array plate 5 so that the cold mirror 104 is disposed in the interval. As a result, a compact projection display apparatus can be manufactured.

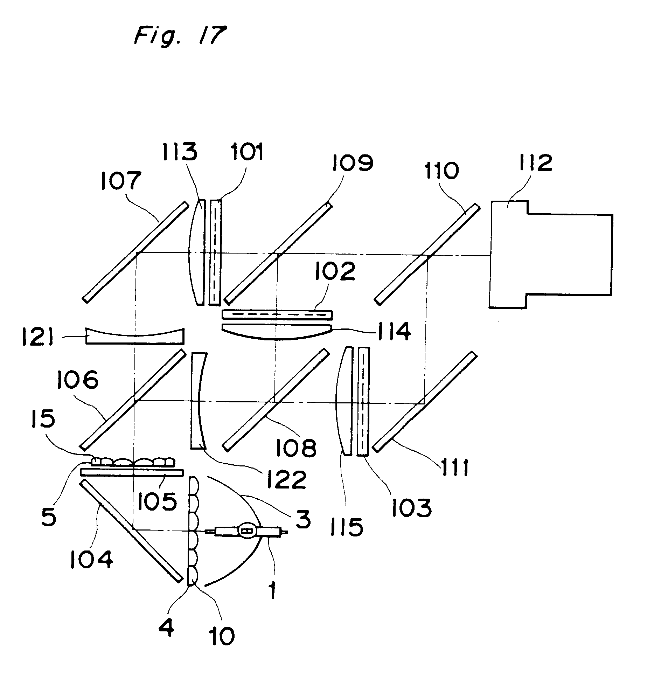

A superior effect can be obtained by modifying the construction as shown in Fig. 16 to the construction as shown in Fig. 17. An embodiment of the projection display apparatus with this construction is described below. The projection display apparatus includes concave lenses 121 and 122 added to the components shown in Fig. 16. That is, the concave lenses 121 and 122 are positioned between the second lens array plate 5 and the liquid crystal panels 101, 102, and 103, respectively. The reason for the addition of the concave lenses 121 and 122 is described below.

The length of the optical path between the second lens array plate 5 and the liquid crystal panels 101, 102, and 103 is determined by the interval in which two of the dichroic mirrors 106 and 108 and the return mirror 107 can be provided. If the length of the optical path is longer than is required, the optical system becomes large. Preferably, a certain length is required for the optical path between the first lens array plate 4 and the second lens array plate 5 so that the cold mirror 104 is disposed therebetween. As a result, there is a limitation to the similarity ratio of the effective display region of the liquid crystal panel to the sectional area of the aperture of the first lens, i.e., there is a limitation to the magnification (M) of the second lens.

The reason for the provision of the concave lenses 121 and 122 in the projection display apparatus is described below with reference to the construction of the optical illumination system shown in Fig. 4. The magnification (M) of the second lens is determined by the ratio between the length of the optical path X2 and the length of the optical path X1, that is, M=X2/X1. If only the aperture size of the concave mirror 3 is too great, a compact optical system cannot be constructed. Thus, the number of the first lenses 10 is limited due to the limitation of the aperture size of the first lens 10. But it is necessary that the number of the first lenses is great to some extent to form an image uniformly bright in a high extent. In this respect, the limitation of the number of the first lenses causes a big problem.

The use of the concave lenses 121 and 122 allows the number of the first lenses to be great. This is because the position of the principal point of the incident side of the second lens can be moved toward the first lens due to the provision of the concave lenses 121 and 122 positioned between the second lens and the liquid crystal panels. That is, with reference to Fig. 4, the length X1 of the optical path can be equivalently shortened, and also the length X2 of the optical path can be equivalently elongated, respectively. Consequently, the projection display apparatus having the above-described construction is compact and yet forms an image uniformly bright in a high extent projected.

In the above-described embodiments, the liquid crystal panel is used as the light bulb, but an element capable of spatially modulating illuminating light provides a similar effect. The effect of the projection display apparatus according to the present invention can be obtained not only by the construction as shown in Figs. 15, 16, and 17, but also by constructions modified within the scope of the present invention.

As apparent from the foregoing description, the optical illumination system according to the present invention utilizes beams radiated by the light source with a high efficiency to provide illuminating light uniformly bright in a high extent and forming a small angle with the main optical axis. The projection display apparatus using the optical illumination system is compact and provides an image uniformly bright in a high extent even though the projection display apparatus includes a projection lens having a large f-number.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. An optical illumination system for projecting an illumination light flux along a principal axis (7) to illuminate an object region (6) having a predetermined effective area which is perpendicular to the principal axis, said optical illumination system comprising:
a radiation source (1,2);
condensing means (3; 71; 72,73) for condensing light beams radiated from said radiation source (2) into a single luminous flux along said principal axis; a first lens array (4;4';4") which is comprised of a plurality of first lenses (10;10';10") disposed in a two-dimensional array;
a second lens array (5;5';5") which is comprised of a plurality of second lenses (15;15';15") disposed in a two-dimensional array, said second lenses being respectively paired with said first lenses;
said first lens array being optically disposed in said principal axis between said condensing means and said second lens array as to divide the single luminous flux formed by said condensing means into a plurality of partial luminous fluxes, the number of which is the same as that of the first lenses, each of said first lenses converging a respective one of the partial luminous fluxes onto the aperture of the corresponding second lens, and each of said second lenses having a magnification adapted to magnify each partial luminous flux onto said object region to be illuminated,
wherein the aperture of at least one of the second lenses has a different geometrical configuration than that of the aperture of another of the second lenses, and the effective area of the second lens array, formed by all of the apertures of the second lenses, approximately inscribes a circle,
characterized in that for at least some of the second lenses and the first lenses paired therewith, the larger the height (H) of the first lens defined as the distance between the center (22) of the aperture of said first lens (10) and said principal axis, the smaller the area of the aperture of the second lens paired with the corresponding first lens, wherein the radiation source, the condensing means and each of the lenses of the first lens array are arranged so that the larger the height (H) of the first lens, the smaller the size of the image (26) of the radiation source projected on the aperture of the second lens (15) paired with the first lens (10).

2. The optical illumination system as defined in claim 1, wherein said condensing means is comprised of a concave mirror (3), and said radiation source has a major axis substantially coincident with the optical axis of said condensing means.

3. The optical illumination system as defined in claim 1, wherein each of said first lenses is comprised of a plano convex lens, the convex surface of which being the incident side thereof.

4. The optical illumination system as defined in claim 1, wherein an optical surface of each of the lenses of at least one of said lens arrays is aspherical.

5. The optical illumination system as defined in claim 1, wherein the shape of the aperture of each of said first lenses is configured substantially similar to the shape of the object region (6) to be illuminated.

6. The optical illumination system as defined in claim 1, further comprising a return mirror (104) disposed on the optical path between said first lens, array and second lens array, and a concave lens (121;122) disposed on the optical path downstream of said second lens array.

7. The optical illumination system as defined in claim 1, wherein said radiation source is comprised of a metal halide lamp.

8. The optical illumination system as defined in claim 1, wherein at least one of said lens arrays has a substrate (83), and some of the lenses of said at least one of said lens arrays have convex surfaces, adjacent ones of said convex surfaces (81,82) in the array being alternately disposed on opposite sides of said substrate.

9. The optical illumination system as defined in claim 1, wherein each of said lenses of said second lens array is comprised of a Fresnel lens (91).

10. The optical illumination system as defined in claim 9, wherein said second lens array includes a substrate (92), and the optical surface of adjacent ones of the Fresnel lenses in the array is alternately disposed on opposite sides of the substrate.

11. The optical illumination system as defined in claim 1, wherein one of said lens arrays is formed of transparent silicon rubber.

12. A projection display apparatus comprising:
an optical illumination system (50);
a light modulator (51) which produces an optical image said optical image being illuminated by said optical illumination system; and
optical projection means (52) for enlarging the illuminated optical image on the light modulator and for projecting the enlarged optical image onto a screen (53), characterized in that the optical illumination system (50) is a system as claimed in any one of claims 1 to 11.

13. The projection display apparatus as defined in claim 12, wherein said light modulator is comprised of a liquid crystal panel (51).

## Patentansprüche

1. Optisches Beleuchtungssystem zum Projizieren eines Beleuchtungslichtstromes entlang einer Hauptachse (7), um einen Objektbereich (6) zu beleuchten, der einen vorbestimmten Nutzbereich aufweist, welcher senkrecht zu der Hauptachse angeordnet ist, wobei das optische Beleuchtungssystem enthält:
eine Strahlungsquelle (1, 2),
Konzentrationsmittel (3, 71, 72, 73) zum Konzentrieren von aus der Strahlungsquelle (2) abgestrahlten Lichtstrahlen in einen einzelnen Lichtstrom entlang der Hauptachse,
eine erste Linsenmatrix (4; 4'; 4"), die aus mehreren ersten Linsen (10; 10'; 10") gebildet ist, die in einer zweidimensionalen Matrix angeordnet sind,
eine zweite Linsenmatrix (5; 5'; 5"), die aus mehreren zweiten Linsen (15; 15'; 15") gebildet ist, die in einer zweidimensionalen Matrix angeordnet sind, wobei die zweiten Linsen mit den ersten Linsen jeweils zu Paaren zusammengefaßt sind,
wobei die erste Linsenmatrix optisch in der Hauptachse zwischen dem Konzentrationsmittel und der zweiten Linsenmatrix so angeordnet ist, daß der einzelne Lichtstrom, der durch das Konzentrationsmittel gebildet wird, in mehrere Teillichtströme aufgeteilt wird, deren Zahl gleich der Zahl der ersten Linsen ist, wobei jede erste Linse den jeweiligen Teillichtstrom auf die Blende der entsprechenden zweiten Linse konvergieren läßt und wobei jede zweite Linse eine Vergrößerung besitzt, die in der Lage ist,
jeden Teillichtstrom auf den zu beleuchtenden Objektbereich zu vergrößern, wobei die Blende zumindest einer der zweiten Linsen eine geometrische Gestaltung aufweist, die von der Gestaltung der Blende einer anderen zweiten Linse verschieden ist, und wobei der Nutzbereich der zweiten Linsenmatrix, der durch sämtliche Blenden der zweiten Linsen gebildet wird, ungefähr einen Kreis einbeschreibt,
**dadurch gekennzeichnet**, daß für zumindest einige der zweiten Linsen und der mit diesen jeweils zu einem Paar zusammengefaßten ersten Linsen gilt: je größer die Höhe (H) der ersten Linse, die als Abstand zwischen der Mitte (22) der Blende der ersten Linse (10) und der Hauptachse definiert ist, desto kleiner ist der Bereich der Blende der zweiten Linse, die mit der entsprechenden ersten Linse ein Paar bildet, wobei die Strahlungsquelle, das Konzentrationsmittel und jede Linse der ersten Linsenmatrix so angeordnet sind, daß gilt: je größer die Höhe (H) der ersten Linse, desto kleiner ist die Größe des Bildes (26) der Strahlungsquelle, das auf die Blende der zweiten Linse (15) projiziert wird, die mit der ersten Linse (10) ein Paar bildet.

2. Optisches Beleuchtungssystem nach Anspruch 1,
bei dem das Konzentrationsmittel aus einem Konkavspiegel (3) gebildet ist und bei dem die Strahlungsquelle eine Hauptachse aufweist, die im wesentlichen koinzident mit der optischen Achse des Konzentrationsmittels ist.

3. Optisches Beleuchtungssystem nach Anspruch 1,
bei dem jede erste Linse aus einer plankonvexen Linse gebildet ist, deren konvexe Oberfläche die Lichteinfallseite ist.

4. Optisches Beleuchtungssystem nach Anspruch 1,
bei dem eine optische Oberfläche jeder Linse von zumindest einer der Linsenmatrizen asphärisch ist.

5. Beleuchtungssystem nach Anspruch 1,
bei dem die Form der Blende jeder ersten Linse im wesentlichen gleich der Form des zu beleuchtenden Objektbereichs (6) gestaltet ist.

6. Beleuchtungsystem nach Anspruch 1,
weiterhin enthaltend einen Rückstrahlspiegel (104), der im Strahlengang zwischen der ersten Linsenmatrix und der zweiten Linsenmatrix angeordnet ist, und eine Konkavlinse (121; 122), die im Strahlengang stromabwärts der zweiten Linsenmatrix angeordnet ist.

7. Optisches Beleuchtungssystem nach Anspruch 1,
bei dem die Strahlungsquelle aus einer Metallhalogenlampe gebildet ist.

8. Optisches Beleuchtungssytem nach Anspruch 1,
bei dem zumindest eine der Linsenmatrizen ein Substrat (23) aufweist und bei dem einige der Linsen dieser wenigstens einen Linsenmatrix konvexe Oberflächen besitzen, wobei benachbarte konvexe Oberflächen (81, 82) in der Matrix abwechselnd an gegenüberliegenden Seiten des Substrats angeordnet sind.

9. Optisches Beleuchtungssystem nach Anspruch 1,
bei dem jede Linse der zweiten Linsenmatrix eine Fresnellinse (91) ist.

10. Optisches Beleuchtungssystem nach Anspruch 9,
bei dem die zweite Linsenmatrix ein Substrat (92) enthält und bei dem die optischen Oberflächen von benachbarten Fresnellinsen in der Matrix abwechselnd an gegenüberliegenden Seiten des Substrats angeordnet sind.

11. Optisches Beleuchtungssystem nach Anspruch 1,
bei dem eine der Linsenmatrizen aus lichtdurchlässigem Siliconkautschuk gebildet ist.

12. Projektionsanzeigevorrichtung, enthaltend:
ein optisches Beleuchtungssystem (50),
einen Lichtmodulator (51), welcher ein optisches Bild erzeugt, wobei das optische Bild durch das optische Beleuchtungssystem beleuchtet wird, und optische Projektionsmittel (52) zum Vergrößern des beleuchteten optischen Bildes auf dem Lichtmodulator und zum Projizieren des vergrößerten optischen Bildes auf einen Bildschirm (53),
**dadurch gekennzeichnet**, daß das optische Beleuchtungssystem (50) ein System nach einem der Ansprüche 1 bis 11 ist.

13. Projektionsanzeigevorrichtung nach Anspruch 12,
bei der der Lichtmodulator von einer Flüssigkristalltafel (51) gebildet wird.

## Revendications

1. Système d'éclairage optique destiné à projeter un flux de lumière d'éclairage le long d'un axe principal (7) pour éclairer une région objet (6) ayant une étendue efficace prédéterminée qui est perpendiculaire à l'axe principal, ledit système d'éclairage optique comprenant :
une source de rayonnement (1, 2);
un moyen de condensation (3, 71, 72, 73) destiné à condenser les faisceaux de lumière émis depuis ladite source de rayonnement (2) pour former un flux lumineux unique le long dudit axe principal;
un arrangement des premières lentilles (4, 4'; 4"), lequel est composé d'une pluralité de premières lentilles (10, 10'; 10") disposées suivant un arrangement à deux dimensions;
un arrangement des deuxièmes lentilles (5, 5'; 5"), lequel est composé d'une pluralité de deuxièmes lentilles (15, 15', 15") disposées suivant un arrangement à deux dimension, lesdites deuxièmes lentilles (15) étant respectivement mises par paire avec lesdites premières lentilles;
ledit arrangement des premières lentilles étant disposé optiquement suivant ledit axe principal entre ledit moyen de condensation et ledit arrangement des deuxièmes lentilles de manière à diviser le flux lumineux unique formé par ledit moyen de condensation en une pluralité de flux lumineux partiels, dont le nombre est le même que celui des premières lentilles, chacune desdites premières lentilles faisant converger un flux lumineux partiel respectif vers l'ouverture de la deuxième lentille correspondante, et chacune desdites deuxièmes lentilles possédant un grossissement adapté pour grossir chaque flux lumineux partiel sur ladite région objet devant être éclairée,
dans lequel l'ouverture d'au moins l'une des deuxièmes lentilles a une configuration géométrique différente de celle de l'ouverture d'une autre des deuxièmes lentilles et dans lequel l'étendue efficace de l'arrangement des deuxièmes lentilles formée par toutes les ouvertures des deuxièmes lentilles s'inscrit approximativement dans un cercle,
caractérisé en ce que pour au moins certaines des deuxièmes lentilles et des premières lentilles mises par paire les unes avec les autres, plus grande est la hauteur (H) de la première lentille définie comme étant la distance entre le centre (22) de l'ouverture de ladite première lentille (10) et ledit axe principal, plus l'étendue de l'ouverture de la deuxième lentille mise par paire avec la première lentille correspondante est petite, dans lequel la source de rayonnement, le moyen de condensation et chacune des lentilles de l'arrangement des premières lentilles sont agencés de telle façon que plus la hauteur de la première lentille est grande, plus la taille de l'image (26) de la source de rayonnement projetée sur l'ouverture de la deuxième lentille (15) mise par paire avec la première lentille (10) est petite.

2. Système d'éclairage optique selon la revendication 1, dans lequel ledit moyen de condensation est composé d'un miroir concave (3), et dans lequel ladite source de rayonnement possède un grand axe qui coïncide sensiblement avec l'axe optique dudit moyen de condensation.

3. Système d'éclairage optique selon la revendication 1, dans lequel chacune desdites premières lentilles est composé d'une lentille plan-convexe, la surface convexe de celle-ci étant le côté incident.

4. Système d'éclairage optique selon la revendication 1, dans lequel une surface optique de chacune des lentilles faisant partie d'au moins l'un des arrangements de lentilles est sphérique.

5. Système d'éclairage optique selon la revendication 1, dans lequel la forme de l'ouverture de chacune desdites premières lentilles est configurée sensiblement de façon similaire à la forme de la région objet (6) devant être éclairée.

6. Système d'éclairage optique selon la revendication 1, comprenant en outre un miroir de renvoi (104) disposé sur le chemin optique entre l'arrangement des premières lentilles et l'arrangement des deuxièmes lentilles, et une lentille concave (121, 122) disposée sur le chemin optique en aval dudit arrangement des deuxièmes lentilles.

7. Système d'éclairage optique selon la revendication 1, dans lequel ladite source de rayonnement est composée d'une lampe métal-halogène.

8. Système d'éclairage optique selon la revendication 1, dans lequel au moins l'un desdits arrangements des lentilles possède un substrat (23), et dans lequel certaines des lentilles d'au moins l'un desdits arrangements des lentilles ont des surfaces convexes, les surfaces convexes adjacentes faisant partie desdites surfaces convexes (81, 82) dans l'arrangement étant disposées de manière alternée sur les côtés opposés dudit substrat.

9. Système d'éclairage optique selon la revendication 1, dans lequel chacune desdites lentilles dudit arrangement des deuxièmes lentilles est composé d'une lentille de Fresnel (91).

10. Système d'éclairage optique selon la revendication 9, dans lequel ledit arrangement des deuxièmes lentilles comprend un substrat (92), et dans lequel la surface optique des lentilles de Fresnel qui sont adjacentes dans l'arrangement est disposée de manière alternée sur les côtés opposés du substrat.

11. Système d'éclairage optique selon la revendication 1, dans lequel l'un desdits arrangements des lentilles est à base de caoutchouc transparent au silicium.

12. Dispositif d'affichage par projection comprenant:
un système d'éclairage optique (50) ;
un modulateur de lumière (51) qui produit une image optique, ladite image optique étant éclairée par ledit système d'éclairage optique ; et
un moyen de projection optique (52) destiné à agrandir l'image optique éclairée sur le modulateur de lumière et à projeter l'image optique agrandie sur un écran (53),
caractérisé en ce que le système d'éclairage optique (50) est un système selon l'une quelconque des revendications 1 à 11.

13. Dispositif d'affichage par projection selon la revendication 12, dans lequel ledit modulateur de lumière est composé d'un panneau à cristaux liquides (51).
